# EUROPEAN PATENT SPECIFICATION

(11) **EP 0 922 092 B1**
(45) Date of publication and mention of the grant of the patent: **25.08.2004**
(21) Application number: 98928866.7
(22) Date of filing: 08.06.1998
(51) Int. Cl.: C12N 5/00, C12N 7/00, C12N 7/02

(54) **METHOD OF ATTENUATING VIRUSES**
VERFAHREN ZUR ABSCHWÄCHUNG VON VIREN
PROCEDE D'ATTENUATION DE VIRUS

(30) Priority: 13.06.1997 US 874272; 05.06.1998 US
(43) Date of publication of application: 16.06.1999
(73) Proprietor: RESEARCH DEVELOPMENT FOUNDATION, Carson City, Nevada 89703 (US)
(72) Inventor: BARRETT, Alan, Galveston, TX 77554 (US); RYMAN, Kate, Chapel Hill, NC 27516 (US); NI, Haolin, Galveston, TX 77550 (US)
(74) Representative: McQueen, Andrew Peter
(86) International application number: PCT/US1998/011329
(87) International publication number: WO 1998/056896

(56) References cited:
- BARRETT A D T ET AL: "MOLECULAR BASIS OF ATTENUATION AND IMMUNOGENICITY OF A LIVE ATTENUATED JAPANESE ENCEPHALITIS VACCINE VIRUS SA14-14-2" VACCINES (COLD SPRING HARBOR), 1991, pages 259-264, XP000993559 ISSN: 0899-4072
- NI HAOLIN ET AL: "Attenuation of Japanese encephalitis virus by selection of its mouse brain membrane receptor preparation escape variants." VIROLOGY, vol. 241, no. 1, 1 February 1998 (1998-02-01), pages 30-36, XP002167258 ISSN: 0042-6822
- CAO J.X. et al., "Passage of Japanese Encephalitis Virus in HeLa Cells Results in Attenuation of Virulence in Mice", JOURNAL OF GENERAL VIROLOGY, 1995, Vol. 76, pages 2757-2764, XP002910403
- NI H. ET AL: 'MOLECULAR BASIS OF ATTENUATION AND VIRULENCE OF JAPANESE ENCEPHALITIS VIRUS', 1997, ELSEVIER, PARIS
- DUNSTER ET AL: 'Attenuation of virulence of flaviviruses following passage in HeLa cells' JOURNAL OF GENERAL VIROLOGY vol. 71, March 1990, pages 601 - 607

## Description

### BACKGROUND OF THE INVENTION

### Field of the Invention

The present invention relates generally to the fields of virology, immunology and protein chemistry. More specifically, the present invention relates to a novel method of attenuating viruses.

### Description of the Related Art

Vaccination is the best approach to reducing mortality and morbidity of humans caused by infectious diseases. Vaccines have made significant contributions to the eradication or control of several major infectious diseases in the world, such as smallpox, yellow fever, poliomyelitis and measles. In particular, live attenuated vaccines have been successful due to stimulation of different arms of the host immune response. These live vaccines are natural virus variants derived by passaging virus in abnormal hosts, e.g. yellow fever 17D virus in chicken tissue (Monath, 1990). However, this method is empirical, not cost-efficient, and takes a long time to develop a useful vaccine that can be administered to humans.

A virus can not infect a susceptible cell unless its viral attachment protein can bind to a molecule on the cell surface which serves as receptor for the particular virus. The expression of the receptor on specific cells or tissues in the whole host is a major determinant of route of virus entry into the host, the pattern of virus spread in the host and resulting pathogenesis (Marsh and Helenius, 1989; Lentz, 1989; Dimmock and Primrose, 1995). There are many factors determining host range and tissue tropism of viruses, including the nature, number and distribution of host cell receptor sites, which may be multivalent and consist of several receptor units (Paulson, 1985; Mims, 1986).

Japanese encephalitis (JE) is a disease caused by Japanese encephalitis virus, a mosquito-borne flavivirus which is epidemic throughout Asian countries (Huang, 1982) and the most common epidemic virus encephalitis in the world. The virus has a tissue tropism for the brain, in particular neurons. Japanese encephalitis virus belongs to genus *flavivirus* of the family *Flaviviridae* (Westaway *et al.,* 1985). The genome of the virus consists of one single-stranded, positive sense RNA which is 10,986 nucleotides in length and contains one long open reading frame that encodes three structural proteins at the 5' end (capsid (C), membrane (M) and envelope (E) proteins) and seven non-structural proteins (NS1, NS2A, NS2B, NS3, NS4A, NS4B and NS5) at the 3' end. The virus causes a neurological disease with a mortality rate of up to 50% and as many as 70% of survivors may develop neurological sequelae.

There is no therapy to prevent the disease. Consequently, vaccines are used to control the disease (1). Attempts to generate live attenuated vaccines have proven difficult due to the neurotropism of the virus and the potential of reversion to virulence. Currently, little is known about the molecular basis of attenuation and virulence of Japanese encephalitis virus.

Wild-type yellow fever (YF) virus, the prototype member of the *Flavivirus* genus, is characterized by causing hepatitis and hemorrhagic fever (i.e., viscerotropic disease) and not neurotropic disease in humans and monkeys. YF is controlled by the use of live attenuated vaccines known as 17D and FNV (French neurotropic vaccine) (Barrett, 1997), which demonstrate varying degrees of neurotropism in humans and monkeys, and not viscerotropism.

The attenuated FNV viruses were derived by passage of wild-type strain French viscerotropic virus (FVV) in mouse brain (Mathis *et al.,* 1928). Although the FNV virus was attenuated for viscerotropism, it was found to have enhanced neurotropic properties, including lethality for monkeys following intracerbral inoculation and high incidence of post-vaccinal complications in children under the age of 11 years old (Durieux, 1956). In comparison, the 17D vaccine was attenuated for both viscerotropism and neurotropism to the extent that 17D virus rarely kills monkeys following intracerebral inoculation and the incidence of post-vaccinal complications is very low such that the 17D vaccine can safely be given to children aged one-year-old. The greater attenuated phenotype of 17D resulted in 17D virus replacing FNV virus as the vaccine of choice to control yellow fever.

Dunster, L.M. et al (J. Gen. Virol. 71:601-607, 1990) describes an investigation of the attenuation of virulence of the flaviviruses West Nile virus, louping ill and Lahgat following passage in HeLa cells. The results indicate that the louping-ill and Langat viruses are not readily attenuated by passage in HeLa cells.

Ni, H. et al (Factors in the Emergence of Arbovirus Diseases, Saluzzo, J.F. and Dodet, B (Eds), Elsevier, Paris, 1997, pp 203-211) describes the use of mouse brain membrane receptor preparations (MRPs) to generate mouse brain MRP binding-resistant variants of JE virus strain P3 which were attenuated for neuroinvasiveness and neurovirulence in mice. However, Ni et al does not suggest or consider that the method developed for JE virus could be successfully used for other viruses.

The prior art is deficient in the lack of effective means of attenuating viruses. The present invention fulfils this longstanding need and desire in the art.

### SUMMARY OF THE INVENTION

A novel methodology has been established to select potential yellow fever virus or langat virus vaccine candidates using the Japanese encephalitis virus as a basis for the development of a model system.

Currently, the molecular basis of attenuation and virulence of Japanese encephalitis (JE) virus is not fully understood. Attenuation and virulence was examined using two systems: the first system involves the process of attenuation of wild-type strain SA14 to generate live attenuated vaccines by passage in primary hamster kidney cell culture. The genome of SA14 differs from its four vaccine derivatives at only seven common amino acids (E-138, E-176, E-315, E-439, NS2B-63, NS3-105 and NS4B-106). The second system involves analysis of wild type strain P3 which is the most virulent strain identified to date. Comparison of the genome of strain P3 with other wild-type strains has enabled identification of 16 unique amino acids. including 9 in the envelope (E) protein, involved in the virulent phenotype of strain P3. Mouse brain membrane receptor preparation binding-resistant variants indicate that E-306 and E-408 are involved in receptor binding. Overall, studies to date indicate that the E protein is a key determinant of the mouse attenuated or virulent phenotype of Japanese encephalitis virus.

Three variants of Japanese encephalitis virus strain P3 were selected for resistance to binding to mouse brain membrane receptor preparations (MRP). These MRP^{R} variants were significantly attenuated in mice for both neuroinvasiveness (>200 fold) and neurovirulence (>1000 fold) compared to their parent virus. All attenuated mouse brain MRP^{R} variants replicated in sera of mice following either intracerebral (i.c.) or intraperitoneal (i.p.) inoculation whereas replication was detected in brains of mice following i.c. inoculation. Two common amino acid mutations were found in the envelope (E) protein genes of all mouse brain MRP^{R} variants at residues E-306 and E-408 of the E protein compared to P3 virus grown in mosquito C6-36 cells or purified and amplified in monkey kidney Vero cells. These amino acids are putatively responsible for attenuation due to alteration in binding of Japanese encephalitis virus, to its cell receptor in mouse brain. Generation of Japanese encephalitis human brain MRP^{R} variants resulted in viruses that were attenuated 5,000,000-fold for mouse neurovirulence. Similarly, yellow fever monkey brain MRP^{R} variants were attenuated 8,000-fold for neurovirulence in mice and Langate virus mouse brain MRP^{R} variants were attenuated up to 16,000-fold for mouse neurovirulence. The methodology developed herein has general applicability to attenuation of virulence of viruses and to identify agents that block amino acids in viral attachment protein(s) that interact with cell receptors.

In the present invention, there is provided a method of selecting virus vaccine candidates by selecting virus variants that do not bind to brain membrane receptor preparations, comprising the steps of: (a) preparing a brain membrane receptor preparation; (b) mixing an amount of a yellow fever virus or langat virus with an amount of said membrane receptor preparation containing excess membrane receptors to form a virus-membrane receptor preparation suspension; (c) centrifuging said suspension to form a supernatant; (d) determining residual virus infectivity in said supernatant; and (e) isolating individual virus variants that do not bind to said membrane receptor preparation, wherein said virus variants are useful as virus vaccine candidates.

Other and further aspects, features, and advantages of the present invention will be apparent from the following description of the presently preferred embodiments of the invention given for the purpose of disclosure.

### BRIEF DESCRIPTION OF THE DRAWINGS

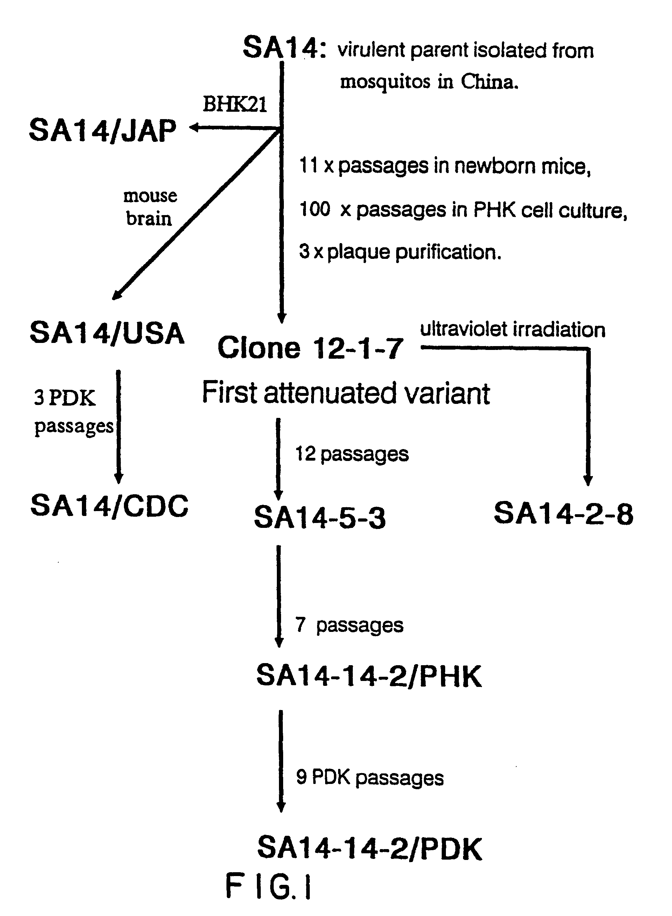

Figure 1 shows the passage history of the SA14-derived vaccine viruses.

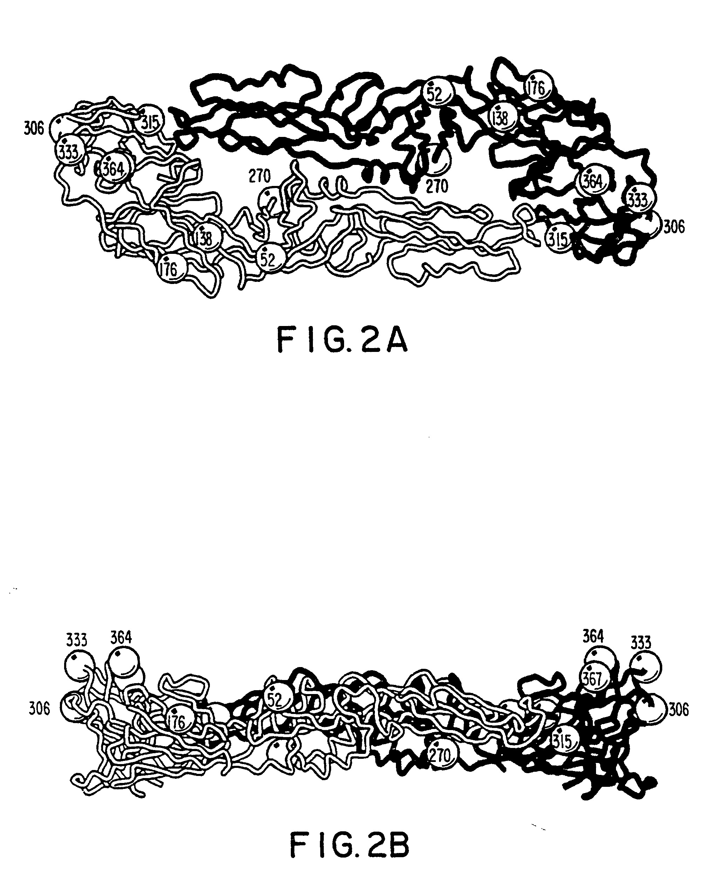

Figure 2 shows the model of structure of the ectodomain of the E protein (modified from 17). Panel A: top view, panel B: side view.
Figure 3 shows the model of the soluble portion of the E protein with the appropriate amino acids highlighted (modified from Rey et al., 1995). Panel A: top view, panel B: side view.
Figure 4 shows the model of the soluble portion of the E protein with the appropriate amino acids highlighted (modified from Rey et al. 1995). Panel A: top view, panel B: side view.

### DETAILED DESCRIPTION OF THE INVENTION

In the present invention, a highly neurovirulent flavivirus, Japanese encephalitis virus, was used as a model system to investigate the viral attachment protein-cell receptor interaction. A novel methodology has been established to select potential yellow fever virus or langat virus vaccine candidates. The present invention evaluates attenuation of neurovirulence and neuroinvasiveness of the human brain MRPR variants in mice, and compares the genetic mutation(s) which may be responsible for attenuation of virulence of JE virus in human brain and mouse brain.

The present invention is directed to a method of selecting virus vaccine candidates by selecting virus variants that do not bind to brain membrane receptor preparations, comprising the steps of: (a) preparing a brain membrane receptor preparation; (b) mixing a n amount of a yellow fever virus or langat virus with an amount of said membrane receptor preparation containing excess membrane receptors to form a virus-membrane receptor preparation suspension; (c) centrifuging said suspension to form a supernatant; (d) determining residual virus infectivity in said supernatant; and (e) isolating individual virus variants that do not bind to said membrane receptor preparation, wherein said virus variants are useful as virus vaccine candidates. Preferably, the brain membrane receptor preparation is selected from the group consisting of mouse brain membrane receptor preparation and human brain membrane receptor preparation. When prepared according to the methods described herein, the brain membrane receptor preparation has a protein concentration of about 20-40 mg wet brain per ml. Preferably, the isolation of individual virus variants that do not bind to said membrane receptor preparation is by amplification from plaques produced by said virus variants. Variants generated by the methods described herein are incubated with fresh brain membrane receptor preparations and a lack of binding of the variants to fresh brain membrane receptor preparations confirm that the variants are true variants. Most preferably, the variants are attenuated for neuroinvasiveness and neurovirulence.

Given the techniques disclosed by the instant specification, a person having ordinary skill in this art would be able to design anti-viral compounds based on identification of amino acids responsible to the cell receptor sites on a three dimensional structure of the viral attachment protein that binds a receptor.

Given the techniques disclosed by the instant specification, a person having ordinary skill in this art would be able to design sequential mutants by generating a MRPR mutant using one tissue followed by sequential selection using a MRPR mutant from a second tissue. In such a way, a variant can be designed to which is attenuated for multiple tissues and this would be desirable since some viruses demonstrate disease potential in different tissues.

In the following examples, the invention is illustrated with reference to Japanese encephalitis virus which was used by the inventors as a model system to establish a novel methodology to select potential yellow fever virus or langat virus candidates. Mention of Japanese encephalitis virus is for reference only: Japanese encephalitis virus is outside the scope of the invention.

### EXAMPLE 1

### Molecular determinants of virulence of JE virus

As with most viruses, Japanese encephalitis virus demonstrates strain variation. Strain P3 is recognized as being a highly virulent strain whereas strains JaOArS982 and Nakayama are of intermediate virulence, and SA14 is of low virulence (TABLE I).

**TABLE I**

| Comparison of the Virulence of Wild-Type JE Virus Strains in Weanling Mice Following Different Routes of Inoculation | | | |
|---|---|---|---|
| | Lethality (pfu/LD50) | | |
| Virus | Intracerebral | Intranasal | Intraperitoneal |
| P3 | 0.0001 | NT | 50 |
| Nakayama | 0.1 | 800 | 10,000 |
| JaOArS982 | 0.1 | NT | 3,000,000 |
| SA14/USA | 2 | > 5,000,000 | > 5,000,000 |

| | | | |
|---|---|---|---|
| NT: Not tested | | | |

### EXAMPLE 2

### Envelope protein

The E protein is the major structural protein of the virus and is thought to encode the virus attachment protein, i.e., the viral protein that interacts with the cell receptor. Since four of the seven SA14 vaccine amino acid substitutions are in the E protein, attenuation may be, in part, due to altered cell tropism of the vaccine strains. This is supported by immunohistochemical studies which show a very small number of neurons in mouse brain contain SA14-14-2 viral antigen, and none of the cytopathological features seen following infection by wild-type parental strain SA14 (9).

Studies with anti-Japanese encephalitis virus monoclonal antibody neutralization-resistant (MAbR) variants show that mutations at E-52+E-364+E-367 (10), or E-270, or E-333 (11) all attenuate mouse neuroinvasiveness, but not neurovirulence. Examination of monoclonal antibody neutralization-resistant variants for other flaviviruses reveals that attenuated neuroinvasiveness (but not neurovirulence) maps to E-277 for Murray Valley encephalitis virus (12), E-308 (equivalent to E-305 for Japanese encephalitis virus) for louping ill virus (13), and E-384 (equivalent to E-384 for Japanese encephalitis virus) for central European tick-borne encephalitis (CE TBE) virus (14). Two other studies involving mutagenesis of Japanese encephalitis virus have shown that E-138 attenuates mouse neurovirulence and involves an identical substitution of Glu for Lys as seen with E-138 in the SA14 series of vaccines (15,16).

To illustrate the interaction of Japanese encephalitis virus with mouse brain in more detail, membrane receptor preparations were made from mouse brain using standard pharmacological techniques. The mouse brain membrane receptor preparations have been used to generate mouse brain membrane receptor preparations binding-resistant (MRPR) variants. Three mouse brain membrane receptor preparation binding-resistant variants were generated from strain P3, shown not to bind to fresh mouse brain MRPs and were all attenuated for neuroinvasiveness and neurovirulence in mice (TABLE II). All three have the same two amino acid substitutions at E-306 and E-408. Both residues are unique for strain P3 and the MRPR mutation induces a reversion to the residues found in other strains of Japanese encephalitis virus.

**TABLE II**

| Mouse neurovirulence of parent JE P3 virus and the mouse brain: MRPR variants following intracerebral or intraperitoneal inoculation | | | | |
|---|---|---|---|---|
| Virus | | Route of inoculation | | |
| | | intraperitoneal | intracerebral | |
| | | pfu/LD₅₀ | pfu/LD₅₀ | AST±SEM |
| Parent | P3 | 50 | <0.0001 | 6.5 ±0.3 |
| Mouse | MRP^{R} I | >50,000 | 5.6 | 8.0±1.2 |
| brain | MRP^{R} II | >50,000 | 0.8 | 8.0±1.2 |
| Variants | MRP^{R} III | >50.000 | 10.0 | 8.6±1.0 |
| #:AST±SEM: Average survival time ± SEM which were caculated from mice inoculated with 10 pfu virus by i.c. route. | | | | |

### EXAMPLE 3

### Viruses and cells

Wild-type Japanese encephalitis virus strains P3 was provided by Dr. Robert Shope of Yale Arbovirus Research Unit. Monkey kidney (Vero) cells and *Aedes albopictus* mosquito C6-36 cells were grown at 37°C and 28°C, respectively, in Eagle's minimal essential medium (EMEM; Sigma) supplemented with 10% heat-inactivated fetal calf serum (Sigma), 2 mM L-glutamine (Sigma) and antibiotics.

### EXAMPLE 4

### Mouse brain membrane receptor preparation

Mouse brains were collected from 3-4 week old female balb/C mice. The brain membrane receptor preparations (MRPs) were made based on the method described for neurotransmitter receptor binding assays (Middlemiss and Frozard, 1983). Briefly, the brains were rapidly dissected, weighed and homogenized in Tris buffer (50 mM, pH 7.6). The homogenate was centrifuged (35,600g for 10 minutes), the pellet resuspended in the same volume of Tris buffer and this process was repeated twice. Between the second and third centrifugations, the homogenate was incubated at 37°C for 10 minutes. The final pellet was resuspended in a volume of Tris buffer (50 mM pH 7.6) to give a final protein concentration of approximately 20-40 mg wet brain/ml and stored at -70°C .

### EXAMPLE 5

### Generation of virus mouse brain MRP escape (MRP^{R}) variants

Prior to use, aliquot(s) of frozen membrane receptor preparations and virus were removed from -70°C. rapidly thawed at 37°C and kept on ice (4°C). A 100 µl aliquot of virus was added to 900 µl of the mouse brain membrane receptor preparations containing excess membrane receptor(s), and vortexed. Control virus samples were prepared in the same way, but mixed with 900 µl of Tris buffer (50 m M Tris, pH 7.6) instead of membrane receptor preparation. Samples were incubated at 37°C for 30 minutes on a rotating stand. After incubation, the virus-membrane receptor preparation suspension and control virus-Tris buffer samples were centrifuged at 13,000 rpm for 10 minutes to remove the membrane material and bound virus. Residual virus infectivity in the supernatant was determined by infecting Vero cell monolayer and counting plaques produced after five days incubation at 37°C. The individual MRP^{R} variant plaques were picked and amplified in Vero cells. The virus variants generated were investigated for binding to fresh membrane receptor preparations. Lack of binding of the virus variants to fresh mouse brain membrane receptor preparation confirmed that they were true MRP^{R} variants.

### EXAMPLE 6

### Mouse pathogenicity studies

NIH-Swiss female outbred white mice, 3 to 4 weeks old were obtained from Harlan, Indianapolis, IN. The mice were inoculated with either 20 µl of virus by the intracerebral (i.c.) route or 100 µl by the intraperitoneal (i.p.) route. Virulence studies involved eight mice per dose group. LD₅₀ and average survival time (AST) values were determined. Mice examined for infectivity were sacrificed at day two or day seven post i.c. or i.p. inoculation and the brains and sera were processed for infectivity titration by plaque assays.

### EXAMPLE 7

### Immunogenicity study

NIH-Swiss female outbred white mice, 3 to 4 weeks old were obtained from Harlan. Indianapolis, IN. Four mice for each MRP^{R} variant were inoculated with 10³ pfu virus by the i.p. route. Mice was sacrificed on day 15 post-inoculation and blood collected by cardiac puncture. The serum fraction was collected and stored at -20°C. Neutralization assays were performed as described in Wills et al. (1992).

### EXAMPLE 8

### Sequencing and analyzing the genome of virus RNAs

RT-PCR, cloning and sequencing of the virus RNA were as described before (Ni et al., 1994). Computer analyses of nucleic acid data and deduced amino acid sequences were accomplished using the MICROGENIE (Queen and Korn, 1984), PCGENE and Genetic Computer Group (Devereux *et al.,* 1984).

### EXAMPLE 9

### Generation and confirmation of MRP^{R} variants

Japanese encephalitis virus strain P3 grown in C6-36 cells (P3/C6-36) was mixed and incubated with mouse brain, monkey brain or monkey liver membrane receptor preparations at 37°C for 3 0 minutes, the mixture was pelleted and supernatant plaqued as described above. Japanese encephalitis P3 virus bound to mouse brain and monkey brain membrane receptor preparations, but not monkey liver membrane receptor preparations (TABLE III). P3/C6-36 virus bind to monkey brain membrane receptor preparations completely. For selection of mouse brain membrane receptor preparations resistant (MRP^{R}) variants, P3/C6-36 virus was mixed with excess mouse brain membrane receptor preparations, which resulted in a 10^{3.6} reduction in infectivity (TABLE III). Three plaques of P3 virus that escaped binding to the mouse brain membrane receptor preparations were selected and amplified in Vero cells.

**TABLE III**

| P3 virus binding test to mouse brain, monkey brain, and monkey liver membrane receptor preparations | | | |
|---|---|---|---|
| | Infectivity (Log₁₀pfu | Binding index | Binding (%) |
| Buffer | 6.1 | -- | -- |
| Mouse brain MRP | 2.5 | 3.6 | 99.97 |
| Monkey Brain MRP | >1.0 | >5.1 | >99.99 |
| Monkey liver MRP | 6.0 | 0.1 | 8.33 |
| #Infectivity: infectious virus remaining in supernatant following incubation of virus with MRP or buffer, and pelleting virus MRP complex as described above. *binding index: log₁₀ infectivity in buffer | | | |

After plaque purification and amplification in Vero cells, none of the three MRP^{R} variant viruses bound to fresh mouse brain membrane receptor preparations (TABLE IV), which confirmed that they were true MRP^{R} variants. In parallel, the P3/C6-36 virus used to generate the MRP^{R} variants was also plaque purified and amplified in Vero cells (P3/Vero) for determination of effects of Vero cell passage on the phenotype P3 virus. This P3/Vero virus bound to mouse brain membrane receptor preparations with similar binding as with P3/C6-36 virus (TABLE IV).

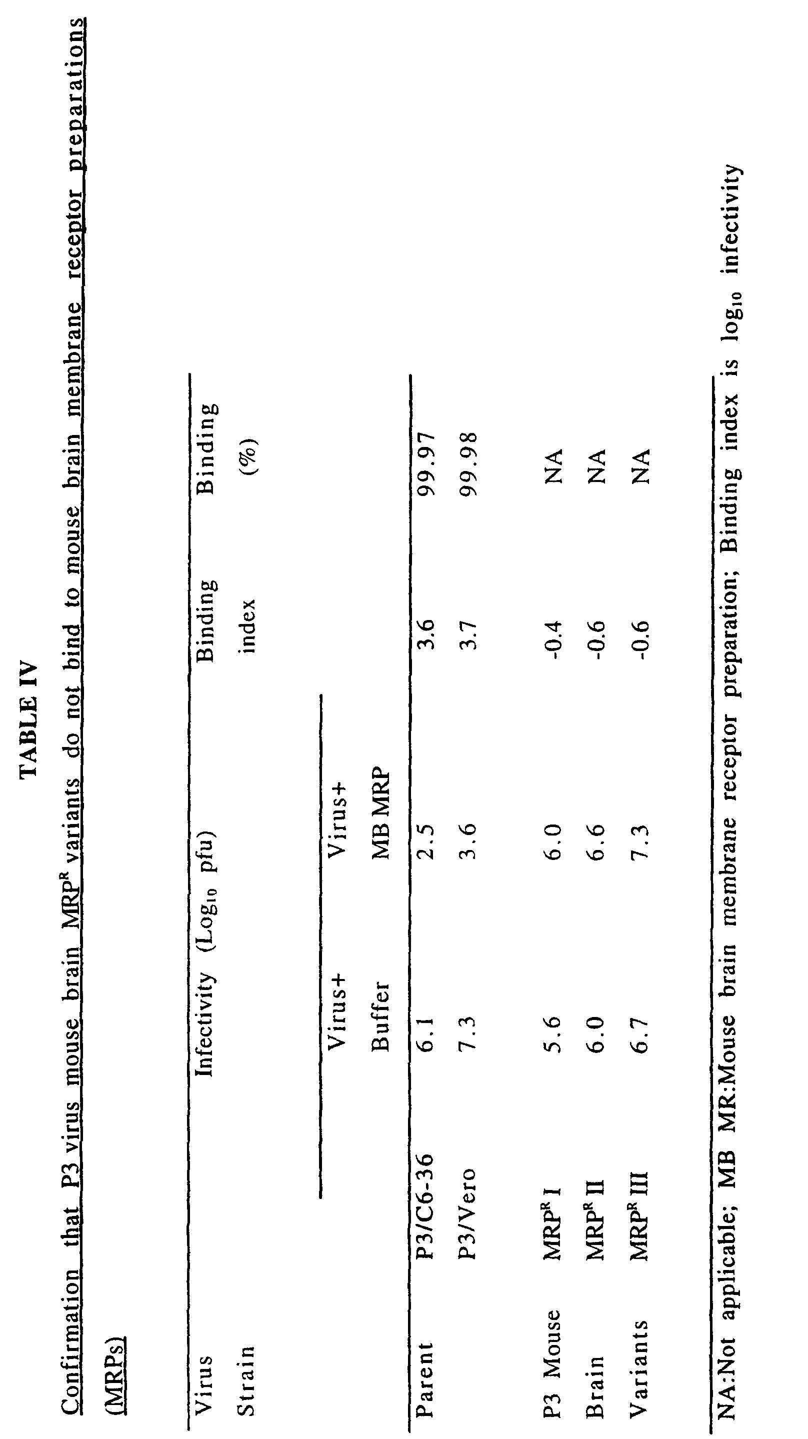

### EXAMPLE 10

### Pathogenicity of wild-type JE virus strains P3 and its variants

Groups of outbred NIH-Swiss mice were inoculated b y the i.c or i.p. route with either parental P3/C6-36 or P3/Vero virus, or one of the MRP^{R} variants. The pfu/LD₅₀ values and AST±SEM were determined. Comparison of parental P3/C6-36 and P3/Vero viruses showed that plaque purification and amplification in Vero cells had little effect on the virulence of P3 virus in terms of both LD₅₀ following i.c. or i.p. inoculation (TABLE V) although P3/Vero virus was slightly less virulent than P3/C6-36 virus. In comparison, all three mouse brain MRP^{R} variants were attenuated at least 200 fold compared with the parental P3 viruses following i.p. inoculation (i.e., neuroinvasiveness) (TABLE V). Also, all three mouse brain MRP^{R} variants were significantly attenuated in neurovirulence (at least 500 fold) compared with their parental viruses after i.c. inoculation of mice (TABLE II). The average survival times of mice infected with the mouse brain MRP^{R} variants were also longer than that of the parental P3 virus (TABLE V).

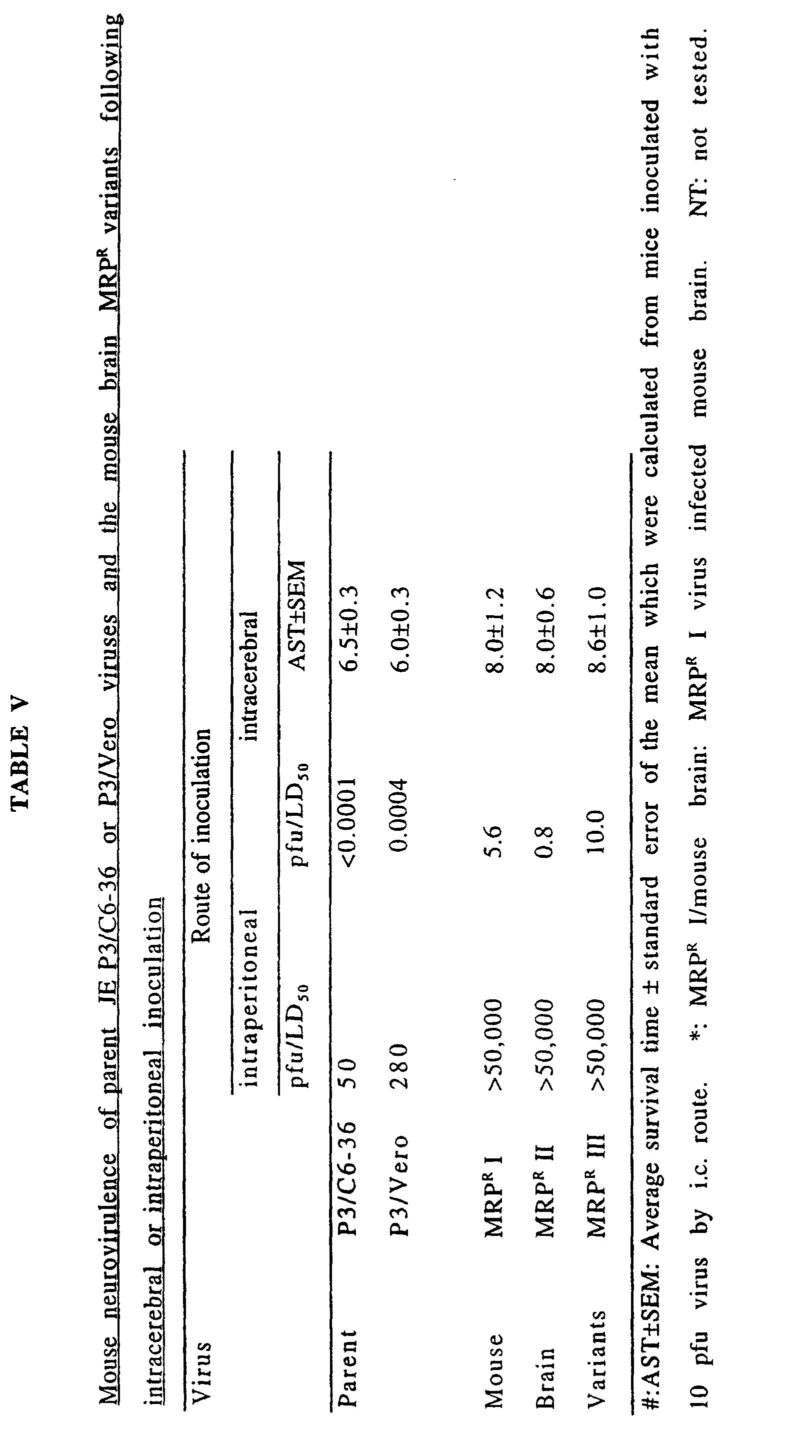

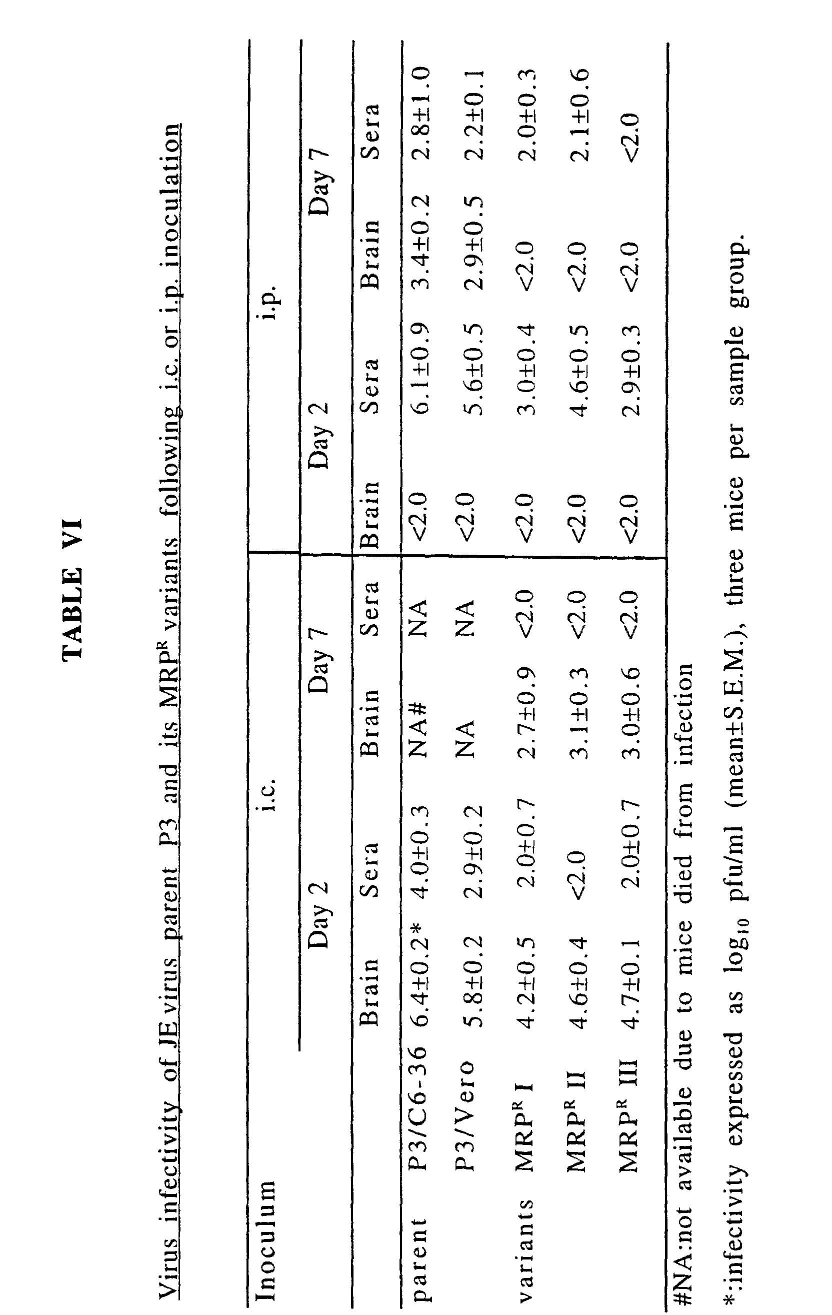

**TABLE VII**

| Neutralization antibody titer elicited by mouse brain MRP^{R} escape virus variants | | | |
|---|---|---|---|
| | MRP^{R} I | MRP^{R} II | MRP^{R} III |
| Neutralization antibody titer | 320 | 320 | >320 |
| | 160 | 160 | 320 |
| | 160 | 160 | 160 |
| | 40 | 160 | 160 |
| Neutralization titer: Taken as the highest dilution of serum to neutralize 50% of homologous challenge virus. | | | |

### EXAMPLE 11

### Determination of infectivity of the MRP^{R} variants following inoculation by the i.c. and i.p. routes

Mice were sacrificed on days two and seven after i.c. inoculation of 1 pfu or i.p. inoculation of 1000 pfu of the viruses to determine whether or not the MRP^{R} variants could replicate in the blood and brains of mice. All three mouse brain MRP^{R} variants replicated in the infected mice (TABLE VI). The infectivity of the MRP^{R} variants in the brains and sera were lower than their parental virus at day two post i.c. inoculation. However, all mice inoculated by the i.c. route with parental P3 virus died by day seven post infection. The infectivity of the MRP^{R} variants was significantly lower than parental virus in the sera at days two and seven post i.p. inoculation.

**TABLE VIII**

| Comparison of amino acid changes in the E protein sequence of P3/C6-36 or P3/Vero and the mouse brain MRP^{R} variants | | | |
|---|---|---|---|
| Position | P3/C6-36 | P3/Vero | MRP^{R} mutants |
| E-46 | T | I | T |
| E-129 | A | T | T |
| E-209 | R | K | K |
| E-306 | G | G | E |
| E-351 | A | V | V |
| E-387 | E | G | G |
| E-408 | L | L | S |
| E-475 | A | A | A |

### EXAMPLE 12

### Immunogenicity of the MRP^{R} variants

NIH-Swiss mice inoculated with the mouse brain MRP^{R} variants induced neutralizing antibody in all infected mice by day 15 post i.p. inoculation (TABLE VII).

### EXAMPLE 13

### Comparison of nucleotide and amino acid sequence changes of the mouse and human brain MRP^{R} variants with wild-type parent P3 viruses and P3 plaque purified and amplified in Vero cells

To investigate the genetic differences and receptor attachment domain of parental P3 virus and its MRP^{R} variants, the pre-memberane (prM), memberane (M) and evelope (E) protein genes of P3 viruses and the MRP^{R} variants were cloned and sequenced. The P3/Vero virus had 13 nucleotide differences compared with the P3/C6-36 virus in prM, M and E protein genes, which resulted in five amino acid changes at positions of E-46, E-129, E-209, E-351 and E-387 (TABLE VIII), which may be responsible for the reduced virulence of P3/Vero virus compared to P3/C6-36 virus. These amino acid differences can not be considered to be responsible for virus attenuation of the MRP^{R} variants.

The three mouse brain MRP^{R} variants had identical nucleotide sequences in prM, M and E protein genes. They had 2 3 nucleotide differences compared to the P3/C6-36 virus and 20 nucleotide differences to the P3/Vero virus. However, these mouse brain MRP^{R} variants have only two amino acid changes compared with parental P3/C6-36 and P3/Vero viruses at residues E-306 (G→E) and E-408 (L→S) (TABLE VIII).

### EXAMPLE 14

### Analysis of E protein secondary structures

Secondary structures of E protein of parental and the MRP^{R} variants were analyzed at region around E-306 and E-408 by the Novotny and GGBSM program in PCGENE. The Novotny program revealed that charged residue profile, alpha helix propensity, beta sheet propensity and reverse turn propensity were changed when E-306 residue glycine mutated to glutamic acid, and hydrophobicity profile, alpha helix propensity, beta sheet propensity and reverse turn propensity were changed when E-408 residue leucine replaced by serine. The GGBSM program indicated that coil, extended and helical profiles were changed when either residue E-306 (G↔E) or E-408 (L↔S) was changed.

Virus binding to the host cell surface receptors is the first step in the virus replication cycle, and is directly involved in the tissue tropism and pathogenesis of many viruses (Fields & Greene, 1982). Despite their importance, the identities and host cell functions of relative few cell receptors for viruses are known or widely accepted. No cellular receptors for flaviviruses have been identified although it is assumed that E protein of flaviviruses plays a role in the cellular tropism by being involved in virus binding to cellular receptors. Recently, Chen *et al.* expressed E protein of dengue-2 virus which bound to Vero, CHO, endothelial, and glial cells. Recombinant E protein inhibited infection of Vero cells by dengue virus.

Investigation *in vivo* of cell receptors for viruses is difficult due to manipulation of animal tissues and the inability to purify sufficient virus to undertake physical binding assays. The present invention describes a procedure for selection of variants that could be generated by selection of viruses that do bind to membrane receptor preparations (MRPs) (TABLES II AND III). As a model, binding of Japanese encephalitis virus to mouse brain MRPs was examined. Specificity of the procedure was demonstrated by the inability of Japanese encephalitis virus to bind to monkey liver MRP (TABLE III) and the generation of variants was shown by the failure of mouse brain variants to bind to fresh mouse brain MRP (TABLE III). All three mouse brain MRP^{R} variants were significantly attenuated for both neuroinvasiveness and neurovirulence compared with their wild-type parent P3 virus (TABLE IV). This suggests that selection of MRP^{R} variants could be used as a novel approach to generate vaccine candidates.

Attenuation of the neurovirulence of the Japanese encephalitis P3 strain mouse brain MRP^{R} variants may occur following selection of variants in the virus preparation that have mutated in the receptor attachment domain of the virus, which in the case of *flaviviruses,* is the E protein. Such variants may have changed tissue tropism. Only two common amino acid substitutions were identified at residues E-306 and E-408 (TABLE VIII). These two substitutions significantly changed secondary structure of E protein. Thus, these two amino acids play a critical role in attenuation of the mouse brain MRP^{R} variants.

Involvement of E-306 in the attenuated phenotype is consistent with previous studies on the *flaviviruses* and confirmed the use of MRP to generate attenuated virus variants. Four other attenuated derivatives of wild-type Japanese encephalitis virus have been reported. Two groups reported monoclonal antibody neutralization resistant (MAb^{R}) variants that had mutation at E-270 and E-333 or E-52, E-363 and E-366. All of these variants had reduced mouse neuroinvasiveness, but not neurovirulence, to mouse. In comparison, the serials of live vaccines derived from SA14 virus have four E protein substitutions at E-138, E-176, E-315 and E-435. These vaccine are attenuated for both mouse neurovirulence and neuroinvasiveness in humans. Symiyoshi *et al.* (15) has suggested that the mutation at E-138 is a major determinant of attenuation of mouse neorovirulence.

Mapping of the amino acid substitutions in the above mutants and the mouse MRP^{R} variants of the present invention onto the proposed model of the three dimensional structure of the E protein of the tick-born encephalitis (TBE) virus (Rey *et al.,* 1995), a flavivirus related to Japanese encephalitis virus, revealed that many of the mutations cluster to domain III of E protein, which suggests that domain III is important in mouse virulence, probably as a virus attachment domain to the mouse cellular receptors. This is consistent with the proposal of Rey *et al.* (1995) and supported by studies of other flaviviruses which showed that MAb^{R} variants to Louping ill virus (E-308, E-310 and E-311; Jiang *et al.,* 1993; Gao *et al.,* 1994), TBE virus (E-387) and dengue virus (E-383, E-384 and E-385; Hiramatsu *et al.,* 1996; E-390, Sanchez *et al.,* 1996) are all attenuated for mouse neurovirulence, and these mutations were mapped to domain III of the E protein.

The amino acid substitution at residue E-408 of the MRP variants is located in the stem region of the flavivirus E protein which links the ectodomain to the membrane anchor region. The transmembrane α helix stem region has recently been proposed as an important element for low-pH-induced oligenomic rearrangement of the E protein. The E-408 substitution alters the alpha-helix and virus induced membrane fusion.

TABLE II showed that neuroinvasiveness of the mouse brain MRP^{R} variants was more attenuated than that of neurovirulence compared with their parents. That MRP^{R} variants were found in the sera and but not in the brain at day two and day seven post-inoculation through i.p. route (TABLE IV) indicated that P3 virus variants may replicate in blood vessels but they have been difficult to penetrate the blood-brain barrier.

The present invention demonstrated that Japanese encephalitis virus mouse brain MRP^{R} can be readily selected in *vitro* from parental virus seed in presence of excess amount of MRP. Selected virus MRP^{R} variants have an attenuated phenotype in mouse. The present invention suggests that selection for MRP^{R} variants from target tissue of the virus is one potential route to generate attenuated virus strains and that it is conceivable to generate attenuated variants with multiple mutations selection using MPRs from different tissues consecutively. Thus, the present invention provides a novel methodology permitting relatively cheap and rapid selection of the virus vaccine candidate(s).

**TABLE IX**

| Membrane receptor variants of Yellow Fever virus and Langat virus | | | |
|---|---|---|---|
| **Virus** | **Strain** | **MRP$** | **Lethality'** |
| Yellow fever | FNV | - | 0,08 |
| | | MK-1 | >100 |
| | | MK-11 | >100 |
| | | MK-IV | 80 |
| Langat | TP21 | - | 1.3 |
| | | HU-1 | 16 |
| | | MS, pH7.0 | 16,000 |
| | | MS-II | <1000 |
| | | MS-I | 2000 |
| | | HU-III | 126 |
| #: lethality in 3-4 week old ice following intracerebral inoculation. Figures are pfu/LD₅₀. $: MRP = membrane receptor preparation, MK: monkey brain, MS: mouse brain, HU: human brain. | | | |

**TABLE X**

| Mouse neurovirulence following intracerebral and intraperitoneal inoculation of parent JEP3 virus grown in C6-36 or Vero cells and its mouse brain and human brain membrane receptor preparation escape (MRP^{R}) variants | | | | |
|---|---|---|---|---|
| Virus | | | Route of Inoculation | |
| | i.p. | | i.c. | |
| | pfu/LD₅₀ | | pfu/LD₅₀ | AST±SEM# |
| parent | C6-36 | 50 | <0.1 | 6.5±0.3 |
| | Vero | 280 | 0.0004 | 6.0±0.3 |
| Mouse | MRP^{R} I | >50,000 | 5.6 | 8.0±1.2 |
| brain | MRP^{R} II | >50,000 | 0.8 | 8.0±0.6 |
| variants | MRP^{R} III | >50,000 | 10.0 | 8.6±1.0 |
| HBG¹ | MRP^{R} I | >5,000 | >100,000 | >14 |
| variants | MRP^{R} II | >5,000 | >100,000 | >14 |
| HBW² | MRP^{R} I | >5,000 | > 100,000 | >14 |
| Variant | | | | |
| 1: HBG: human brain grey matter; 2: BGW: human brain white matter; #: AST±SEM: average survival time ± standard error of the mean which were calculated from mice inoculated with 10 pfu virus by ic route; *: MRP^{R} I/mouse brain. Virus recovered from mouse brain MRP^{R} I virus-infected mouse brain: ic: intracerebral; ip: intraperitoneal. | | | | |

TABLE X shows that the methodology of the present invention is not restricted to mouse brain MRPs. Human brain MRPs were used to generate MRP^{R}s which were attenuated 5,000,000,000-fold for mouse neurovirulence. Moreover, the methodology is not restricted to Japanese encephalitis virus (TABLE IX). Monkey brain MRP^{R} variants of yellow fever virus were attenuated for mouse neurovirulence following intracerebral inoculation of weanling mice and mouse brain and human brain MRP^{R} variants of Langat virus were attenuated for mouse neurovirulence following intracerebral inoculation of weanling mice.

### EXAMPLE 15

### Generation of virus human brain and human liver membrane receptor preparation escape variants

Human brain was collected from a 74-year-old female who died of a heart attack and human liver was collected from a 76-years-old male who died of lung cancer. The brain and liver membrane receptor preparations (MRPs) were made based on the method described for neurotransmitter receptor binding assays (Middlemiss and Frozard, 1983) but the final MRP was resuspended in Eagle's minimum essential medium (Sigma) containing 2% fetal calf serum and antibiotics. Six human brain MRP variants were selected after parental wide-type JE virus P3 strain was incubated with human brain MRPs derived either from gray or white matter. Infectivity titrations of JE virus were performed in Vero cells.

### EXAMPLE 16

### Receptor binding index comparison between JE wild-type and vaccine viruses

To determine the specificity of interaction of JE virus with MRPs, wild-type strain P3 virus grown in mosquito C6-36 cells (P3/C6-36) and live attenuated vaccine strain SA14-14-2 virus, also grown in mosquito C6/36 cells, (SA14-14-2/C6-36) (Yu *et al.,* 1981 ) were mixed and incubated with either mouse brain, human brain, or human liver MRPs or PBS for 30 mins at 37°C The mixture of virus and MRPs was pelleted and virus that remained in the supernatant was plaqued in Vero cells. JE P3 virus bound to mouse brain (MB), human brain gray matter (HBG) and human brain white matter (HBW) MRPs with similar binding indices (3.3 to 4.0), but not to human liver (HL) MRPs (binding index of 0.3). Live attenuated JE vaccine strain SA14-14-2 virus bound poorly to HBG and HBW MRPs (binding index 0.7 and 0.8 respectively) (TABLE XI). Thus, the results with MRPs are consistent with the tissue tropism of wild-type JE virus (i.e., neurotropism of JE virus) and attenuated phenotype of vaccine strain SA14-14-2.

**TABLE XI**

| Comparison of the binding of JE wild-type strain P3 and live attenuated vaccine SA14-14-2 virus to mouse brain, human brain and human liver MRPs. | | | | |
|---|---|---|---|---|
| Virus Strain | Infectivity^{a} (Log₁₀pfu) | | Binding index^{b} | Binding (%) |
| | Virus+ Buffer | Virus+ MRP* | | |
| P3/C6-36 | 6.1 | 2.5 (MB) | 3.6 | 99.97 |
| P3/C6-36 | 7.3 | 4.0 (HBG) | 3.3 | 99.95 |
| P3/C6-36 | 7.3 | 3.3 (HBW) | 4.0 | 99.99 |
| SA14-14-2 | 6.3 | 5.6 (HBG) | 0.7 | 80 |
| SA14-14-2 | 6.3 | 5.5 (HBW) | 0.8 | 85 |
| P3/C6-36 | 7.1 | 6.8 (HL) | 0.3 | 50 |

| | | | | |
|---|---|---|---|---|
| ^{a}Infectivity: infectious virus remaining in the supernatant following incubation of virus with MRP or buffer and pelleting the virus-MRP complex as described. | | | | |
| ^{b}Binding index: Log₁₀ infectivity in buffer/infectivity in MRP supernatant. | | | | |
| *MB: Mouse brain membrane receptor preparation (MRP). HBG: Human brain gray matter MRP. HBW: human brain white matter MRP. HL: Human liver MRP. | | | | |

### EXAMPLE 17

### Generation of human brain MRP escape variants

For selection of human brain MRP^{R} variants, P3/C6-36 virus that did not bind to either HBG and HBW MRPs were plaque purified and amplified in Vero cells. Six JE P3 human brain MRP^{R} variant viruses were selected on the basis of failure to bind to fresh human brain MRPs and confirmed that they were true MRP^{R} variants. Three MRP^{R} variants were derived by incubation of virus with HBG MRPs and termed HBG MRP^{R} I, II and IIII, respectively. The other three MRP^{R} variants were derived by selection with HBW MRPs and termed HBW MRP^{R} I, II and III, respectively. None of the six human brain MRP^{R} variants bound to HBG, HBW or mouse brain MRPs.

### EXAMPLE 18

### Mouse virulence of wild-type JE virus strain P3 and its human brain MRP^{R} variants

Groups of outbred NIH-Swiss mice were inoculated by either the i.c. or i.p. route with either parent P3 virus or one of the human brain MRP^{R} variants. All six human brain MRP^{R} variants were attenuated for mice (TABLEXII). In comparison to the wild-type parental JE P3 virus which had been passaged in Vero cells (P3/Vero virus), all human brain MRP^{R} variants tested were attenuated at least 200-fold following i.p. inoculation (i.e., neuroinvasiveness) and attenuated at least 25 million-fold for neurovirulence compared with their parent after i.c. inoculation of mice. Interestingly, the human brain MRP^{R} variants were at least 10,000-fold more attenuated for neurovirulence than the mouse brain MRP^{R} variants.

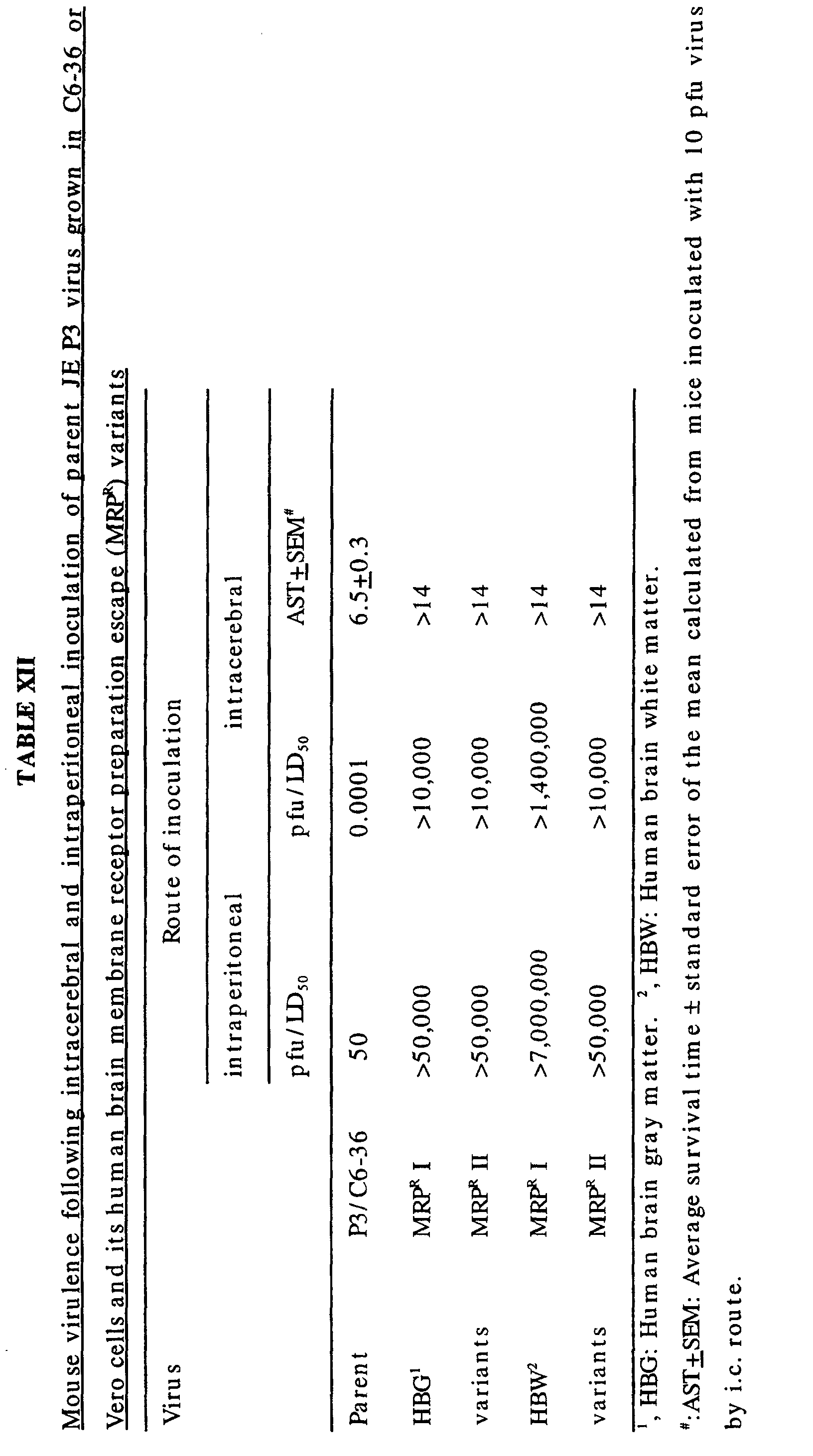

### EXAMPLE 19

### Immunogenicity of the human brain MRP^{R} virus variants in mice

Mice inoculated with 10,000 pfu of either HBG MRP^{R} I or HBW MRP^{R} I variants induced neutralizing antibody in all immunized mice by day 15 post i.p. inoculation (TABLE XIII). Mice immunized with 10,000 pfu of either HBG MRP^{R} I or HBW MRP^{R} I variant viruses were protected against wild-type P3 challenge. However, mice were not protected from wide-type parental P3 virus challenge when immunized i.p. with 1000 pfu of these MRP^{R} variants (TABLE XIV). This indicated that the human brain MRP^{R} variants were less immunogenic than mouse brain MRP^{R} variants which protected mice following immunization of 1000 pfu of the virus by i.p. route.

**TABLE XIII**

| Neutralizating antibody titers induced by immunization of NIH- Swiss mice with 10.000 pfu of human brain MRP^{R} escape virus Variants. | | |
|---|---|---|
| | HBG MRP^{R} I | HBW MRP^{R} I |
| Neutralization | 160 | >320 |
| antibody titer | 160 | 160 |
| | 80 | 80 |
| | 40 | 80 |
| | 20 | 40 |
| Neutralization titer: Taken as the highest dilution of serum to neutralize 50%of homologous challenge virus. | | |

**TABLE XIV**

| Survival of mice challenged with 10.000 pfu parental virus by i.p. route after immunization with either 1.000 pfu or 10.000 pfu human brain MRP^{R} variants | | | |
|---|---|---|---|
| virus | Immunization dose (pfu) | | |
| | 0 | 1000 | 10,000 |
| HBG MRP^{R} I | 0/10^{#} | 0/5 | 5/5 |
| HBW MRP^{R} I | 0/10 | 0/5 | 5/5 |
| The mice were immunized and challenged by i.p. route. ^{#}: number of survivors/number of mice in group. NT: not tested | | | |

### EXAMPLE 20

### Comparison of nucleotide and amino acid sequence changes of the HBGand HBW MRP^{R} variants with wild-type parent P3 viruses

The E protein genes of parental P3 viruses and four human brain MRP^{R} variants (HBG MRP^{R} I and II, and HBW MRP^{R} I and II) were amplified by RT-PCR, cloned and sequenced. The HBG MRP^{R} I and II variants had identical nucleotide sequences while HBW MRP^{R} I and II variants had one silent nucleotide difference at nucleotide 1199 (U/ C). There were 5/ 6 nucleotide differences between the HBG MRP^{R} and the HBW MRP^{R} variants sequenced, which resulted in unique amino acid substitutions at E-488 and E-329, respectively (TABLE XV). The two HBG MRP^{R} variants had 34 nucleotide differences compared with P3/C6-36 virus in the E protein gene, which resulted in 10 amino acid substitutions at residues E-46, E-61, E-76, E-200, E-351, E-387, E-408, E-418 E-475 and E-488 (TABLE XV). The two HBW MRP^{R} variants had 40/41 nucleotide differences compared with P3/C6-36 virus which resulted in 10 amino acid substitutions at E-46, E-61, E-76, E-200, E-329, E-351, E-387, E-408, E-418 and E-475 (TABLE XV). These amino acid changes were located in domains I, II, III and stem-anchor region of the Eprotein (Rey *et al.,* 1995).

Plaque purification of P3/ C6-36 parental virus in Vero cells resulted in P3/ Vero virus with five amino acid substitutions compared to P3/C6-36 virus at E-46, E-129, E-209, E-351 and E-387. Consequently, HBG MRP^{R} variants differed from wild-type P3/ Vero virus at eight residues E-46, E-61, E-76, E-200, E-408, E-418 E-475 and E-488. Similarly, HBW MRP^{R} variants also differed from wild-type P3/Vero virus at eight residues at E-46, E-61, E-76, E-200, E-329, E-408, E-418 and E-475.

**TABLE XV**

| Comparison of amino acid changes in the E protein sequence of parental P3 virus grown in mosquito C6-36 or monkey kidney Vero cells and its human brain membrane escape (MRP^{R}) variants | | | | | |
|---|---|---|---|---|---|
| Amino acid Position | E protein Domain* | P3/ C6-36 | P3/ Vero | HBG MRP^{R} variants | HBW MRP^{R} variants |
| E-46 | Domain I | T | I | S | S |
| E-61 | Domain II | Y | Y | H | H |
| E-76 | Domain II | M | M | T | T |
| E-129 | Domain II | A | T | A | A |
| E-200 | Domain II | F | F | L | L |
| E-209 | Domain II | R | K | R | R |
| E-329 | Domain III | S | S | S | P |
| E-351 | Domain III | A | V | V | V |
| E-387 | Domain III | E | G | G | G |
| E-408 | Stem-anchor | L | L | S | S |
| E-418 | Stem-anchor | A | A | V | V |
| E-475 | Stem-anchor | A | A | I | I |
| E-488 | Stem-anchor | G | G | S | G |

| | | | | | |
|---|---|---|---|---|---|
| * based on the structure of central European tick-borne encephalitis virus (Rey *et al.,* 1995) | | | | | |

### EXAMPLE 21

### Interpretation of amino acid substitutions

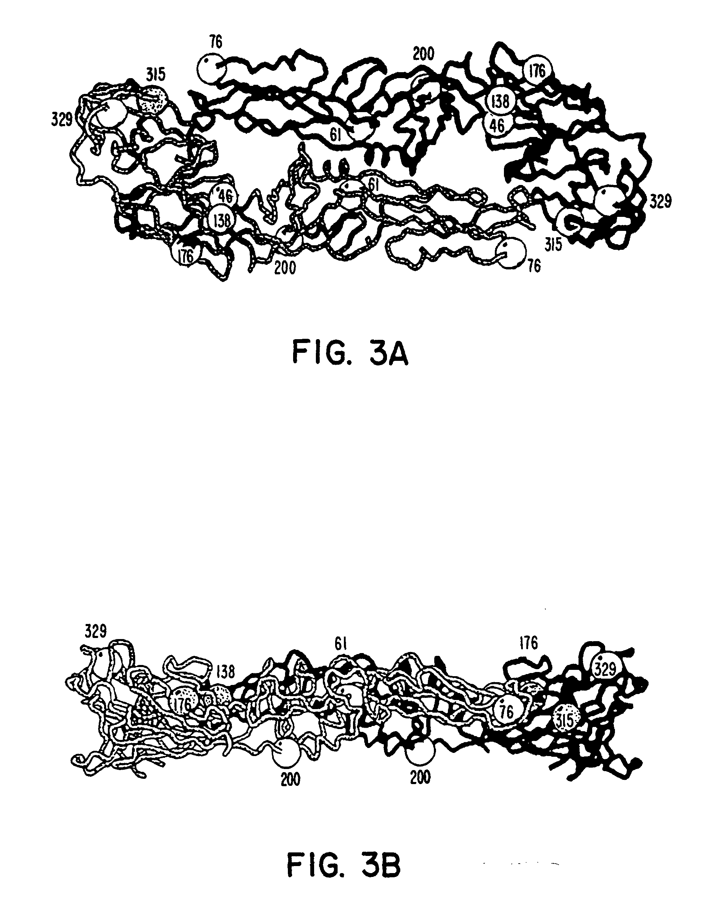

Rey *et al.* (1995) reported the three-dimensional structure of the soluble portion of the E protein of central European tick-borne encephalitis (TBE) virus. The protein was found to exist as a dimer which each monomer containing three domains (I, II and III). Due to conservation of cysteines between flaviviruses, it is possible to model the E protein of JE virus based on that of the published structure of TBE virus. Figure 3 shows a diagrammatic representation of the soluble portion of the E protein of JE virus with amino acid substitutions highlighted. As can be seen, the amino acid substitutions cluster into four groups (E-61 (domain I); E-46, E-76 and E-200 (domain II) and E-329 (domain III), respectively). The E-408, E-418, E-475 or E-488 mutations occur in the stem-anchor region of the flavivirus E protein, and may cause conformational changes in the ectodomain of the E protein. E-46 is spatially near to E-138 in the proposed three-dimensional structure of the JE virus E protein. Therefore, it is speculated that the mutation of E-46 is at least in part responsible for the attenuated phenotype of the human brain MRP^{R} variants.

### EXAMPLE 22

### Interaction of yellow fever French neurotropic vaccine with monkey brain

The methodology described above was used to investigate the interaction of FNV with monkey brain (MKB). The specificity of binding was determined by comparison of wild-type and vaccine strains of yellow fever virus with other flaviviruses, namely Japanese encephalitis (JE) virus strain P3 and dengue serotype 2 (DEN-2) strain New Guinea C (NGC). Neurotropic JE virus P3 strain bound to MKB MRP but not to monkey liver (MKL) MRPs (TABLE XVI) while DEN-2 NGC strain bound neither to MKB nor MKL MRPs. Wild-type yellow fever strains Asibi and FVV bound to MKL MRP but poorly to MKB MRP while vaccine strain 17D-204 bound poorly to both MKB and MKL MRPs. FNV virus was the only strain of yellow fever virus to bind to MKB. Interestingly, 17D-204 vaccine virus bound poorly to MKL and MKB MRPs. This may be indirectly involved in the attenuated phenotype of 17D virus.

**TABLE XVI**

| Comparison of binding of yellow fever, Japanese encephalitis and dengue viruses to monkey brain and monkey liver MRPs. | | | | | |
|---|---|---|---|---|---|
| Virus | strain | Infectivity Log₁₀pfu) | | Binding index | Binding (%) |
| | | Virus + Buffer | Virus + MRP | | |
| JE | P3 | 5.7 | 3.6(MKB) | 2.1 (MKB) | 99.2(MKB) |
| | | | 5.0(MKL) | 0.7(MKL) | 80.0(MKL) |
| | | | | | |
| DEN- 2 | NGC | 5 .8 | 5.5 (MKB) | 0.3 (MKB) | 57.1 (MKB) |
| | | | 5.6(MKL) | 0.2(MKL) | 42.9(MKL) |
| | | | | | |
| YF | FVV | 5.6 | 5.0(MKB) | 0.6(MKB) | 77.5(MKB) |
| | | | 3.8 (MKL) | 1.8 (MKL) | 98.5 (MKL) |
| | | | | | |
| | FNV-Yale | 6.5 | 4.0(MKB) | 2.5(MKB) | 99.7(MKB) |
| | | | 5.0 (MKL) | 1.5 (MKL) | 96.7 (MKL) |
| | | | | | |
| | Asibi | 6.3 | 5.8(MKB) | 0.5(MKB) | 70.0(MKB) |
| | | | 5.0(MKL) | 1.3(MKL) | 95.0(MKL) |
| | | | | | |
| | 17D | 6.8 | 6.3 (MKB) | 0.5 (MKB) | 71.4(MKB) |
| | | | 6.0(MKL) | 0.8(MKL) | 85.7(MKL) |
| ^{a}Infectivity: infectious virus remaining in the supernatant following incubation of virus with MRP or buffer and pelleting the virus-MRP complex. ^{b}Binding index: Log₁₀ infectivity in buffer/infectivity in MRP supernatant. ^{c}MKB: Monkey brain MRP. ^{d}MKL: Monkey liver MRP. | | | | | |

### EXAMPLE 23

### MRPR variants of yellow fever French neurotropic vaccine

Four MKB MRP^{R} variants were generated for FNV "strain" Yale (Wang *et al.* (1995)), except that MRPs was derived from the brain of a cynomolgus monkey. Three MKB MRP^{R} variants were selected in buffer at pH 7.6, and designated as MKB MRP^{R} I, MKB MKRP^{R} II and MKB MRP^{R} III, respectively. The fourth variant was selected in buffer at pH 6.0 and termed MKB MRP^{R} (pH 6.0). Two MRP^{R} variants were also selected from FNV-Yale after incubation with mouse brain MRPs at pH 7.6 and designed as MS MRP^{R} I and MS MRP^{R} II.

FNV-Yale is known to be highly neurovirulent for mice after intracerbral inoculation (Wang *et al.,* 1995) and was found to have a pfu/ LD₅₀ of 0.08 in four-week- old female NIH-Swiss mice while MKB MRP^{R} variant viruses selected at pH 7.6 were attenuated at least 400-fold (e.g., 32 pfu/ LD₅₀ for MKB MRP^{R} II) (TABLE XVII). MKB MRP^{R} (pH 6.0) was attenuated 87-fold compared to parent FNV-Yale virus, and was less attenuated than MKB MRP^{R} variant viruses selected at pH 7.6. The two MS MRP^{R} variants were also attenuated, 100-fold or less, compared with parental FNV-Yale virus (TABLE XVII). Sequencing of pre-membrane (prM) and E protein genes of parent and MRP^{R} variant viruses revealed that each variant only had one nucleotide change resulting in one amino acid substitution in the E protein compared with parental FNV-Yale virus. No changes were identified in the M protein gene. The MKB MRP^{R} (pH 6.0) had one amino acid substitution at E-458 (G→R), and the three MKB MRP^{R} variants selected at pH 7.6 each had a single amino acid substitution at E-260 (G→A), E-274 (Y→H) or E-237 (H→Y) for MKB MRP^{R} I, MKB MRP^{R} II and MKB MRP^{R} III, respectively. The two MS MRP^{R} variants each had an identical amino acid substitution at E-457 (M→I).

**TABLE XVII**

| M neurovirulence following intracerebral inoculation and amino acid differences between FNV-Yale and MRP^{R} variants | | |
|---|---|---|
| Virus | pfu/LD₅₀ i.c. (mouse) | amino acid substitution |
| FNV-YALE | 0.08 | -- |
| MKB MRP^{R} I (pH 7.6) | >100 | E-260 (G→A) |
| MKB MRP^{R} II (pH 7.6) | 32 | E-274 (Y→H) |
| MKB MRP^{R} III (pH 7.6) | 80 | E-237 (H→Y) |
| MKB MRP^{R} (pH 6.0) | 7 | E-458 (G→R) |
| MS MRP^{R} I (pH 7.6) | 5 | E-457 (M→I) |
| MS MRP^{R} II (pH 7.6) | 8 | E-457 (M→I) |

### EXAMPLE 24

### Amino acid subtitutions of the yellow virus French neurotropic vaccines

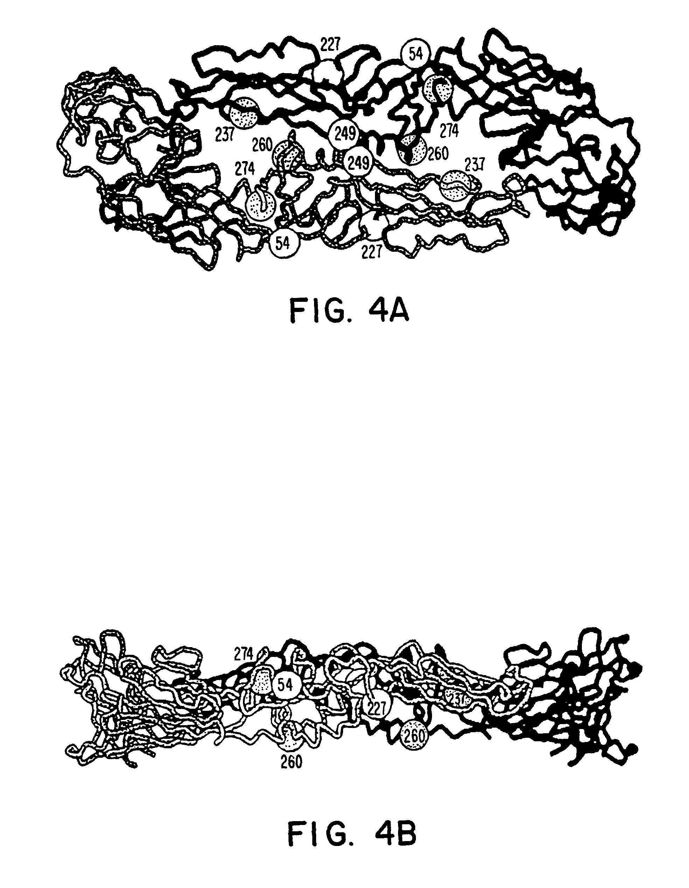

Previous studies have shown that the E protein of wild-type viscerotropic FVV differed from four "strains" of FNV virus by three common amino acid substitutions at E-54, E-227 and E-249 (Wang *et al.,* 1995). Figure 4 shows a diagrammatic representation of the three-dimensional structure of the soluble portion of YF virus E protein based on the structure of TBE virus reported by Rey *et al.* (1995) with the amino acid substitutions found in the FNV viruses highlighted (E-54, E-227 and E-249). The single amino acid substitutions in the E proteins of MKB MRP^{R} I, MKB MRP^{R} II and MKB MRP^{R} III give rise to mutations in domain II at E-237, E-260 and E-274 respectively, that are all near to the E-249 substitution found in the FNV vaccine viruses, suggesting that this region of the E protein is involved in virus binding to monkey brain and may be indirectly related to the enhanced monkey neurotropism of FNV viruses. The E-249 substitution is unique to the four FNV vaccine virus "strains" (Wang *et al.,* 1995). None of the 17D vaccine viruses sequenced so far (Ryman *et al.,* 1997, Rice *et al.,* 1985, Post *et al.,* 1990, Dupuy *et al.,* 1989) or 28 wild-type strains (Chang *et al.,* 1995, Wang *et al.,* 1996, Wang et al., 1997) have this substitution.

The substitution at E-260, E-274 or E-237 of the MKB MRP^{R} variants selected at pH 7.6 were distinct from the MKB MRP^{R} variant selected at pH 6.0 which had an amino acid substitution at E-458 in the stem-anchor region. It is speculated that this substitution is due to the conformational change in the E protein that takes place due to the decrease in pH and is consistent with the proposal for TBE virus (Stiasny et al., 1996). Also, the substitution found in the two MS MRP^{R} variants of YF FNV-Yale strain selected at pH 7.6 were at E-457 in the stem-anchor region of the Eprotein. This suggests, at the very least, the interaction of the E protein of FNV virus with mouse brain and monkey brain cell binding sites is different and may indicate that FNV virus recognizes different cell receptors on mouse brain and monkey brain cells. This suggestion would be consistent with biological studies that show all strains of yellow fever virus infect mouse brain following intracerebral (i.c.) inoculation while only FNV infects monkey brain following i.c. inoculation (Freestone, 1995).

The following references were cited herein:
Anderson, R., et al. 1992. J. Gen. Virol. **73**: 2155-2159.
Cao, J.X., et al. 1995. J. Gen. Virol. **76**: 2757-2764.
Cecilia, D. & Gould, E. A. 1991. Virology **181**: 70-77.
Chang, G. J., et al. 1995. J. Virol. **69**:5773-5780.
Chen, Y., et al. 1996. J. Virol. **70**: 8765-8772.
Devereux J., et al. 1984. Nucl. Acid. Res. **12**: 387-395.
Dupuy, A., et al. 1989. Nucleic Acids Res. **17**:3989-3994
Fields. B.N. & Greene, M.I. 1982. Nature **300**: 19-23.
Freestone, D.S. 1995. Yellow fever vaccines. Pp. 741-779. In Vaccines, second edit., eds: Plotkin, et al., W.B. Saunders, Philadelphia.
Gao, G.F., et al. 1994. J. Gen. Virol. **75**, 609-614.
Guirakhoo, F., et al. 1991. J. Gen. Virol. **72**: 1323-1329.
Heinz, F.X., et al. 1994. Arch. Virol. **9**: 339-348.
Hiramatsu, K., et al. 1996. Virology **224**: 437-445.
Huang C.H. 1982. Adv. Virol. Res. **27**: 71-101.
Ikmura, T. & Ohyama, A. 1988. J. Gen. Virol. **69**: 1247-1254.
Jiang. W.R., et al. 1993. J. Gen. Virol. **74**, 931-935.
Lentz, T. L. 1990. J. Gen. Virol. **71**: 751-766.
Middlemiss, D.N. 1983. Euro. J. Pharmacol. **90:** 151-153.
Mims, C.A. 1986. J. Infect. **12**: 199-203.
Monath, T.P. et al. 1989. American Journal of Tropical Medicine and Hygiene **40:** 663-668.
Monath, T. P. 1990. Flavivirus. p. 763-814. *In "Virology".* B.N. Fields, D.M. Knipe, *et al.,* eds. Raven press New York,
Ni, H., Burns, et al. 1994. J. Gen. Virol. **75**: 1505-1510.
Olmsted, R.A., et al. 1984. Science **225**: 424-426.
Paulson, J.C. 1985. Interaction of animal viruses with cell surface receptors. Vol. 2, p. 131-219. In: *The receptors,* Edited by Conn, P.M. Orlando: Academic Press.
Post, P. R, et al. 1990. Virus Res. **18**:291-302.
Rey, F.A., et al. 1995. Nature **375:** 291-298.
Rice, C. M., et al. 1985. Science **229**:726-733.
Ryman, K D., et al. 1997. Virol. **230**:376-380.
Sanchez I. J., & Ruiz B. H. 1996. J. Gen. Virol. **77:** 2541-2545.
Stiasny, K. et al. 1996. J. Virol. **70:** 8142-8147.
Sumiyoshi, H., et al. 1992. J. Virol. **66**: 5425-5431.
Wang, E. et al. 1995. J. Gen. Virol. **76**:2749-2755.
Wang, E., et al. 1996. Virol. **225**:274-281.
Wang H., et al. 1997. J Gen. Virol. **78**:1349-1352.
Westway, E. G., et al. 1985. Intervirology **24**: 183-192.
Wills, M. R., et al. 1992. Vaccine **10:** 861-872
Yu, Y. X., et al. 1981. J. Microbiol. Immunol. **1:** 77-84
Yu, Y. X., et al. 1988. Am. J. Trop. Med. Hyg. **39:** 214-217
The following publications were cited by reference to numbers.
1. Tsai et al., Japanese encephalitis vaccines. In: Plotkin et al., eds. Vaccines. 2nd ed. Philadelphia: WB Saunders, 1995: 671-713
2. Ni et al., *J Gen Virol* 1996;77:1449-1455.
3. Eckels et *al.,Vaccine* 1988;6:513-518
4. Aihara et al.,*Virus Genes* 1991; 5:95-109.
5. Nitayaphan et al.,*Virology* 1990; 177: 541-552.
6. Ni et al., *J Gen Virol* 1994;75:1505-1510.
7. Ni et al., *J Gen Virol* 1995;76:409-413.
8. Chen et al., Am *J Trop Med Hyg* 1982;31:403407.
9. Hase et al., *Arch Virol* 1993; 130:131-143.
10. Hasegawa et al., *Virology* 1992; 191:158-165.
11. Cecilia et al., *Virology* 1991; 181:70-77.
12. McMinn et al., *Virology* 1995; 211:10-20.
13. Jiang et al., *J Gen Virol* 1993; 74:931-935.
14. Holzmann et al., *J Virol* 1990; 64:5156-5159.
15. Sumiyoshi et al., *J Inf Dis* 1995; 171:1144-51.
16. Chen et al., *Virology* 1996; 223: 79-88.
17. Rey et al., *Nature* 1995; 375:291-298.
18. Jan et al., *J Gen Virol* 1995; 76:573-580.
19. Falgout et al., *J Virol* 1993; 67:2034-2042.
20. Wallner et al., *J Gen Virol* 1996; 77:1035-1042.

## Claims

1. A method of selecting virus vaccine candidates by selecting virus variants that do not bind to brain membrane receptor preparations, comprising the steps of:
(a) preparing a brain membrane receptor preparation;
(b) mixing an amount of yellow fever virus or langat virus with an amount of said membrane receptor preparation containing excess membrane receptors to form a virus-membrane receptor preparation suspension;
(c) centrifuging said suspension to form a supernatant;
(d) determining residual virus infectivity in said supernatant; and
(e) isolating individual virus variants that do not bind to said membrane receptor preparation, wherein said virus variants are useful as virus vaccine candidates.

2. The method of claim 1, wherein said brain membrane receptor preparation is selected from the group consisting of mouse brain membrane receptor preparation and human brain membrane receptor preparation.

3. The method of claim 1, wherein said brain membrane receptor preparation has a protein concentration of about 20-40 mg wet brain per ml.

4. The method of claim 1, wherein said residual virus infectivity in said supernatant is determined by infecting a Vero cell monolayer and counting plaques produced.

5. The method of claim 1, wherein said isolation of individual virus variants that do not bind to said membrane receptor preparation is by amplification from plaques produced by said virus variants.

6. The method of claim 1, wherein said variants generated are incubated with fresh brain membrane receptor preparations and a lack of binding of the variants to fresh brain membrane receptor preparations confirm that the variants are true variants.

7. The method of claim 1, wherein said variants are attenuated for neuroinvasiveness and neurovirulence.

## Patentansprüche

1. Verfahren zur Auswahl von Virusimpfstoffkandidaten durch Auswahl von Virusvarianten, die sich nicht an Hirnmembranrezeptorpräparate binden, das folgende Schritte umfasst:
(a) Herstellen eines Hirnmembranrezeptorpräparats;
(b) Mischen einer Menge eines Gelbfiebervirus oder Langatvirus mit einer Menge des überschüssige Membranrezeptoren enthaltenden Membranrezeptorpräparats zur Bildung einer Suspension des Virusmembranrezeptorpräparats;
(c) Zentrifugieren der Suspension zur Bildung eines Überstandes;
(d) Bestimmen der Restvirusinfektiosität in dem Überstand;
(e) Isolieren einzelner Virusvarianten, die sich nicht an das Membranrezeptorpräparat binden, wobei die Virusvarianten als Virusimpfstoffkandidaten nützlich sind.

2. Verfahren nach Anspruch 1, bei dem das Hirnmembranrezeptorpräparat aus der Gruppe bestehend aus dem Hirnmembranrezeptorpräparat von Mäusen und dem von Menschen ausgewählt ist.

3. Verfahren nach Anspruch 1, bei dem das Hirnmembranrezeptorpräparat eine Proteinkonzentration von etwa 20-40 mg Nasshirn pro ml aufweist.

4. Verfahren nach Anspruch 1, bei dem die Restvirusinfektiosität in dem Überstand durch Infektion einer Vero-Zellmonoschicht und Zählung der entstandenen Plaques bestimmt wird.

5. Verfahren nach Anspruch 1, bei dem die Isolierung einzelner Virusvarianten, die sich nicht an das Membranrezeptorpräparat binden, mittels Amplifikation der durch die Virusvarianten erzeugten Plaques erfolgt.

6. Verfahren nach Anspruch 1, bei dem die entstandenen Virusvarianten mit frischen Hirnmembranrezeptorpräparaten inkubiert werden und die fehlende Bindung der Varianten an frische Hirnmembranrezeptorpräparate bestätigt, dass die Varianten echte Varianten sind.

7. Verfahren nach Anspruch 1, bei dem die Varianten zwecks Neuroinvasionsfähigkeit und Neurovirulenz abgeschwächt werden.

## Revendications

1. Méthode de sélection de candidats pour vaccin viral en sélectionnant des variants de virus qui ne se lient pas à des préparations de récepteur de membrane cérébrale, comprenant les étapes consistant à :
(a) préparer une préparation de récepteur de membrane cérébrale ;
(b) mélanger une quantité de virus de la fièvre jaune ou de virus langat avec une quantité de ladite préparation de récepteur de membrane cérébrale contenant des récepteurs de membrane en excès pour former une suspension de préparation virus - récepteur de membrane ;
(c) centrifuger ladite suspension pour former un surnageant ;
(d) déterminer le pouvoir infectieux viral résiduel dans ledit surnageant ; et
(e) isoler les variants de virus individuels qui ne se lient pas à ladite préparation de récepteur de membrane, dans laquelle lesdits variants de virus sont utiles comme candidats de vaccin viral.

2. Méthode de la revendication 1, dans laquelle ladite préparation de récepteur de membrane cérébrale est choisie dans le groupe comprenant une préparation de récepteur de membrane cérébrale de souris et une préparation de récepteur de membrane cérébrale humaine.

3. Méthode de la revendication 1, dans laquelle ladite préparation de récepteur de membrane cérébrale a une concentration protéique d'environ 20 à 40 mg de cerveau humide par ml.

4. Méthode de la revendication 1, dans laquelle ledit pouvoir infectieux viral résiduel 'dans ledit surnageant est déterminé en infectant une monocouche cellulaire Vero et en comptant les plaques produites.

5. Méthode de la revendication 1, dans laquelle l'isolement desdits variants de virus individuels qui ne se lient pas à ladite préparation de récepteur de membrane cérébrale se fait par amplification à partir de plaques produites par lesdits variants de virus.

6. Méthode de la revendication 1, dans laquelle lesdits variants générés sont incubés avec des préparations de récepteur de membrane cérébrale fraîches et une absence de liaison des variants aux préparations de récepteur de membrane cérébrale fraîches confirme que les variants sont des variants vrais.

7. Méthode de la revendication 1, dans laquelle lesdits variants sont atténués pour limiter leur neuro-invasivité et leur neuro-virulence.
